# EUROPEAN PATENT APPLICATION

(11) **EP 2 645 808 A1**
(43) Date of publication of application: **02.10.2013**
(21) Application number: 12360023.1
(22) Date of filing: 26.03.2012
(51) Int. Cl.: H04W 76/04

(54) **Multi-flow network**

(71) Applicant: Alcatel Lucent, 75007 Paris (FR)
(72) Inventor: Wong, Shin Horng, Chippenham, Wiltshire SN15 3YB (GB); Dhingra, Vikas, Bangalore, Kamataka 560037 (IN)
(74) Representative: Script IP Limited

(57) **Abstract**

A method of implementing a discontinuous reception pattern at user equipment operating to receive an independent stream of data traffic from at least two cells in a multi flow wireless communication network, a computer program product and user equipment operable to perform that method. The method comprises: determining whether an indication to enter a discontinuous reception mode of operation has been stored in relation to each of the at least two cells and, if so, initiating the discontinuous reception pattern. Aspects enable user equipment discontinuous reception modes to be managed and implemented without a need for lub signalling in relation to inter-base station multi-flow operation.

## Description

### FIELD OF INVENTION

The present invention relates to a method of implementing a discontinuous reception pattern at user equipment operating to receive an independent stream of data traffic from at least two cells in a multi-flow wireless communication network, a computer program product and user equipment operable to perform that method.

### BACKGROUND

Wireless telecommunications networks are known. In a cellular system, radio coverage is provided by area. Those areas of radio coverage are known as cells. A base station is located in each cell to provide the radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

User equipment and base stations may be operable to perform multi-flow downlink communications. According to such a multi-flow network, user equipment is operable to receive independent streams of data from base stations. In multi-flow High Speed Downlink Packet Access (HSDPA) (also known as multi-point HSDPA) user equipment is operable to receive two or more independent HSDPA streams from different cells. It will be appreciated that in an intra-base station scenario, user equipment may receive two or more independent HSDPA streams from a single base station in different cells. The cells involved in a multi-flow HSDPA scenario may thus belong to the same base station or to different base stations.

Multi flow operation allows for an increase in data traffic throughput, but may adversely affect other functionality provided in a network.

Accordingly, it is proposed to address adverse effects to a network caused by multi flow operation.

### SUMMARY

A first aspect provides a method of implementing a discontinuous reception pattern at user equipment operating to receive an independent stream of data traffic from at least two cells in a multi flow wireless communication network, the method comprising; determining whether an indication to enter a discontinuous reception mode of operation has been stored in relation to each of the at least two cells and, if so, initiating the discontinuous reception pattern.

The first aspect recognises that user equipment and base stations in a telecommunications network may operate according to a "continuously on" mode of operation. In addition to such a continuously on mode, user equipment may operate in a discontinuous reception (DRx) or discontinuous transmission (DTx) mode. Such modes allow user equipment to save battery power when user equipment is inactive (for example, when user equipment is in an idle state or there is no information to be transmitted between user equipment and a base station).

During discontinuous reception, user equipment shuts down its reception antenna and periodically wakes up to receive possible data traffic and information; for example, paging messages, from the wireless telecommunications network via data sent on downlink channels to user equipment from base station. If the messages received by user equipment in wake-up periods are deemed to exceed a threshold, or indicate that a base station wishes to send more information to user equipment, user equipment is operable to exit from the discontinuous reception mode.

Similarly, a discontinuous transmission (DTx) mode may be implemented by user equipment. In such a case, when in a substantially idle mode, user equipment shuts down its transmitter and only wakes up periodically to transmit packets of data to the network via uplink channels to a base station.

The first aspect recognises that a discontinuous user equipment reception mode of operation in an inter-base station multi-flow scenario is problematic. Each cell may have different data activity rates and, thus, user equipment may be asked to move into a discontinuous reception mode due to low traffic activity in one cell, but another cell may be unaware of that request to enter discontinuous reception mode at user equipment, and schedule data to be sent in a stream to that same user equipment. Furthermore, a cell may incorrectly think that user equipment is operating according to a discontinuous reception mode when, in fact, it is not. Such problems are worsened when either of the base stations supporting cells is operable to issue a specific order (for example, an HS-SCCH order) to activate or deactivate discontinuous reception at user equipment.

The first aspect aims to manage discontinuous user equipment operation in an inter-base station multi-flow transmission scenario.

It will be appreciated that it is possible to inform base stations performing multi-flow HSDPA with a user equipment of the status of other base stations via an RNC; for example, via lub signalling. Such signalling is typically slow and user equipment may have already opted to operate according to a discontinuous reception mode in one cell whilst another cell supported by a different base station may be unaware of such change and continue to send data to a user equipment. Any such data will be lost until an RNC informs a base station supporting such a cell to cease transmissions. Furthermore, such a method may force a cell which has lots of data to send to user equipment to enter a discontinuous transmission mode simply because another cell has less data to send to the user equipment.

The first aspect implements a method according to which user equipment may only move into a discontinuous reception mode if each of the cells participating in multi-flow transmissions to that user equipment indicate that they have a low traffic activity. User equipment is thus operable to unilaterally decide when to enter a discontinuous reception mode based on information received from cells.

According to one embodiment, determining whether an indication to enter a discontinuous reception mode of operation has been stored in relation to each of the at least two cells comprises determining whether all of the at least two cells have indicated that they wish the user equipment to enter a discontinuous reception mode. Accordingly, only when each and every cell which is participating in multi flow downlink operation indicated to user equipment that it is a candidate for discontinuous reception will the user equipment enter such a discontinuous reception mode.

According to one embodiment, a plurality of said at least two multiflow cells supported by a single base station may issue a single indication in respect of said plurality of cells. That is to say, for an inter-site multi-flow network, only one of the cells at each base station need indicate a desire for user equipment to enter a discontinuous reception mode rather than all cells supported by that base station.

According to one embodiment, the indication comprises receipt of an explicit order to enter a discontinuous mode of operation. According to one embodiment, the explicit order comprises an HS-SCCH order. Accordingly, it will be appreciated that a cell may indicate to user equipment that it is a candidate for discontinuous reception in a number of ways. It may, for example, explicitly indicate to the user equipment that the user equipment is such a candidate, and may, for example issue a specific instruction for user equipment to operate in a discontinuous reception mode. User equipment may be operable to "toggle" an indicator in respect of each cell, noting that a cell has (or has not) indicated that the user equipment is a candidate for discontinuous reception operation. An HS-SCCH order is a fast layer 1 message type which allows communication between a base station supporting a cell and user equipment without the need to pass that information up to an RNC. Such an order offers a fast means to communicate to user equipment that it is a candidate for discontinuous reception operation.

According to one embodiment, the indication comprises expiry of an inactivity timer. According to one embodiment, the inactivity timer comprises a common inactivity timer which expires when no data packet is received at the user equipment for a preconfigured period of time from any of the at least two cells. According to some embodiments, the user equipment moves into discontinuous reception mode if an inactivity timer has expired in respect of each cell operating according to multi-flow transmission techniques. According to some embodiments, if different inactivity timers are used for different cells (that is to say, the inactivity timers for each cell have a different value), then user equipment moves into discontinuous reception mode only if all of the inactivity timers expire. An inactivity timer is used to determine if a cell is inactive and, hence, from a user equipment point of view the user equipment is deemed inactive in the downlink if all of the cells which are sending downlink packets to that user equipment are inactive. By waiting for all inactivity timers to expire, the user equipment effectively determines that all cells are inactive and thus that it can move into a discontinuous reception mode. In some embodiments this means that if multiple timers are running with respect to each cell inactivity, the user equipment moves into discontinuous reception mode once the longest inactivity timer expires, assuming that all other inactivity timers have expired.

According to some embodiments, a single inactivity timer is used for all cells and the user equipment re-sets such a common inactivity timer whenever it receives a downlink packet from any cell.

According to one embodiment, the implemented discontinuous reception pattern comprises implementation of common discontinuous reception pattern parameters indicated by the at least two cells.

According to one embodiment, the method further comprises exiting the discontinuous reception pattern if an indication to exit a discontinuous mode of operation is received from any one of the at least two cells. Accordingly, if a cell has a need to communicate with user equipment, it may force that user equipment to exit discontinuous reception mode. It is not necessary for each and every cell participating in multi flow operation with user equipment to indicate a desire to communicate with user equipment. That is to say, the entry and exit from a discontinuous reception mode may be asymmetric, requiring all cells to indicate a desire for the user equipment to enter discontinuous reception mode before it enters that mode, but needing only one cell to indicate a desire for user equipment to exit discontinuous reception mode for the user equipment to exit that mode of operation. According to some embodiments, when user equipment exits a discontinuous reception mode as a result of downlink activity in any one cell, or as a result of having uplink data to transmit, the user equipment is operable to set all toggles or stored indications in respect of multi-flow cells to "active". In other words, once user equipment exits discontinuous reception, all cells are deemed active and the user equipment will assess whether each cell has indicated a desire for inactivity again before re-entering discontinuous reception mode.

According to one embodiment, the indication comprises receipt of downlink data traffic. According to one embodiment, the indication comprises a specific order to exit the discontinuous reception mode of operation. According to some embodiments, user equipment is operable to move out of discontinuous reception if any one of the cells with which it was performing multi-flow communication sends a specific order, for example, an HS-SCCH order, to de-activate discontinuous reception. Since user equipment typically responds to such an explicit order with an acknowledgement, an uplink transmission made by user equipment will typically be detected by all cells in an active set. Thus, all cells operating according to multi-flow techniques are informed that the user equipment has moved out of discontinuous reception.

According to one embodiment, the method further comprises exiting the discontinuous reception pattern on determining uplink data traffic to be transmitted by the user equipment. Accordingly, the user equipment moves itself out of discontinuous reception mode if it has data traffic to transmit to a network.

According to one embodiment, the at least two cells are supported by a single base station.

According to one embodiment, the at least two cells are supported by at least two base stations.

A second aspect provides a computer program product operable, when executed on a computer, to perform the method of the first aspect.

A third aspect provides user equipment operable to implement a discontinuous reception pattern, the user equipment operating to receive an independent stream of data traffic from at least two cells in a multi flow wireless communication network, the user equipment comprising; determination logic operable to determine whether an indication to enter a discontinuous reception mode of operation has been stored in relation to each of the at least two cells and, initiation logic operable to initiate the discontinuous reception pattern if an indication to enter a discontinuous reception mode of operation has been stored in relation to each of the at least two cells.

According to one embodiment, the determination logic is operable to determine whether an indication to enter a discontinuous reception mode of operation has been stored in relation to each of the at least two cells comprises determining whether all of the at least two cells have indicated that they wish the user equipment to enter a discontinuous reception mode.

According to one embodiment, the indication comprises receipt of an explicit order to enter a discontinuous mode of operation.

According to one embodiment, the explicit order comprises an HS-SCCH order.

According to one embodiment, the indication comprises expiry of an inactivity timer.

According to one embodiment, the inactivity timer comprises a common inactivity timer which expires when no data packet is received at the user equipment for a preconfigured period of time from any of the at least two cells.

According to one embodiment, the implemented discontinuous reception pattern comprises implementation of common discontinuous reception pattern parameters indicated by the at least two cells.

According to one embodiment, the user equipment further comprises exit logic operable to exit the discontinuous reception pattern if an indication to exit a discontinuous mode of operation is received from any one of the at least two cells.

According to one embodiment, the indication comprises receipt of downlink data traffic.

According to one embodiment, the indication comprises a specific order to exit the discontinuous reception mode of operation.

According to one embodiment, the user equipment further comprises exit logic operable to exit the discontinuous reception pattern on determining there is uplink data traffic to be transmitted by the user equipment.

According to one embodiment, the at least two cells are supported by a single base station.

According to one embodiment, the at least two cells are supported by at least two base stations.

A further aspect provides a method of exiting a discontinuous reception pattern reception regime at user equipment operating to receive an independent stream of data traffic from at least two cells in a multi flow wireless communication network, the method comprising;
determining whether an indication to exit a discontinuous reception mode of operation has been received from any one of the at least two cells and, if so, exiting the discontinuous reception pattern.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further with reference to the accompanying drawings, in which:
Figure 1 illustrates the main components of a wireless telecommunications network-according to one embodiment;
Figure 2 illustrates schematically user equipment and base stations operable to perform multi-flow downlink communications;
Figure 3 illustrates schematically transmissions and awake periods according to one embodiment; and
Figure 4 illustrates schematically transmissions and awake periods according to one embodiment.

### DESCRIPTION OF THE EMBODIMENTS

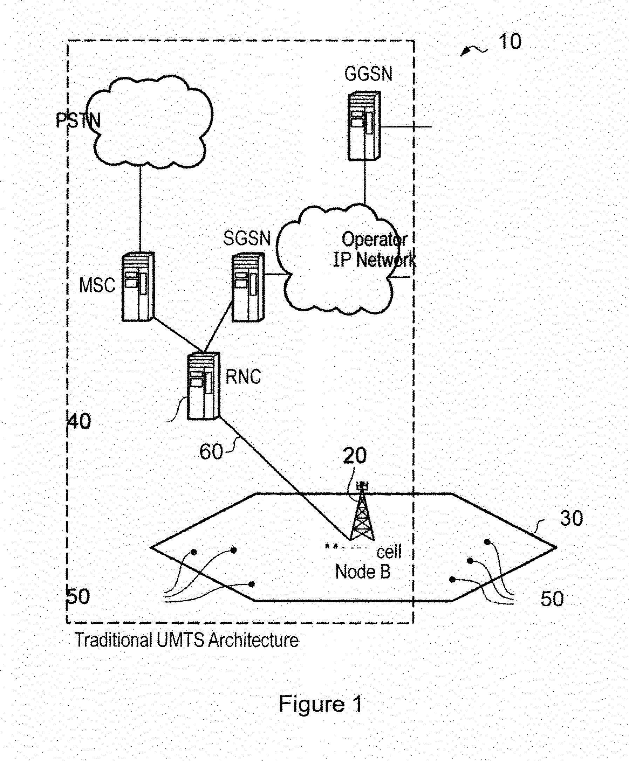

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provided and distributed geographically in order to provide a wide area of radio coverage to user equipment 50. When user equipment is within an area served by a base station 30, communications may be established between the user equipment and the base station over associated radio links. Each base station typically supports a number of sectors within a geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system 10.

The wireless communications system is managed by a Radio Network Controller (RNC) 40. The RNC 40 controls operation of the wireless telecommunications system by communicating with a plurality of base stations over a backhaul communications link 60. The RNC also communicates with user equipment 50 via each base station and, thus, effectively manages a region of the entire wireless communications system.

User equipment communicates with a base station 20 by transmitting data and information on channels known as uplink or reverse channels, and base station 20 communicates with user equipment 50 by transmitting data and information on radio channels known as downlink or forward channels. It will be appreciated that each base station may support one or more "cells" in each sector. A cell typically operates on one frequency. If a base station operates to provide two frequencies to user equipment in a geographical area, the geographical coverage of each of those frequencies is referred to as a cell. Each cell supported by a base station may also comprise sectors as referred to above.

User equipment and base stations may operate according to a "continuously on" mode of operation. In addition to such a continuously on mode, user equipment 50 may operate in a discontinuous reception (DRx) or discontinuous transmission (DTx) mode. Such modes allow user equipment 50 to save battery power when user equipment is inactive (for example, when user equipment is in an idle state or there is no information to be transmitted between user equipment and a base station).

During discontinuous reception, user equipment 50 shuts down its reception antenna and periodically wakes up to receive possible data traffic and information; for example, paging messages, from the wireless telecommunications network 10 via data sent on downlink channels to user equipment 50 from base station 20. If the messages received by user equipment 50 in wake-up periods are deemed to exceed a threshold, or indicate that a base station 20 wishes to send more information to user equipment 50, user equipment is operable to exit from the discontinuous reception mode.

Similarly, a discontinuous transmission (DTx) mode may be implemented by user equipment. In such a case, when in a substantially idle mode, user equipment shuts down its transmitter and only wakes up periodically to transmit packets of data to the network 10 via uplink channels to a base station 20.

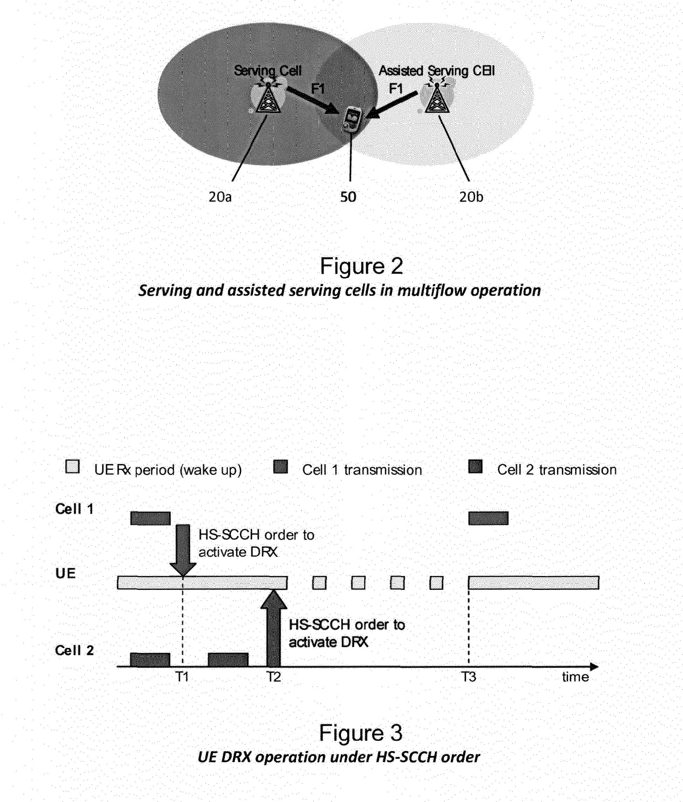

Figure 2 illustrates schematically user equipment and base stations operable to perform multi-flow downlink communications. According to such a multi-flow network, user equipment 50 is operable to receive independent streams of data from base stations 20a and 20b. In multi-flow High Speed Downlink Packet Access (HSDPA) (also known as multi-point HSDPA) user equipment 50 is operable to receive two or more independent HSDPA streams from different cells. In the scenario illustrated schematically in Figure 2, those cells, both on frequency Fl, are supported by different base stations 20a, 20b. It will be appreciated that in an intra-base station scenario, user equipment 50 may receive two or more independent HSDPA streams from a single base station in different cells. The cells involved in a multi-flow HSDPA scenario may belong to the same base station or to different base stations.

In a multi-flow HSDPA scenario, the cell that the user equipment is primarily attached to is referred to as the serving cell. In the scenario illustrated schematically in Figure 2, base station 20a supports a serving cell. Other cells which stream HSDPA packets to user equipment are known as assisted serving cells. In Figure 2, base station 20b supports an assisting serving cell.

As described above, user equipment in a network is often operable to perform discontinuous reception or transmission in order to conserve battery life. Implementation of such techniques known as Continuous Packet Connection techniques (CPC) in multi-flow HSDPA networks may result in complications. It is, for example, possible to implement discontinuous user equipment transmission for intra-base station and inter-base station multi-flow operations. Discontinuous reception at user equipment may only be possible for intra-base station multi-flow operation since, in that instance, a scheduler provided at a base station may easily manage discontinuous reception operation at user equipment operating in a multi-flow scenario if the cells of that multi-flow operation are both supported by the same base station and, thus, the same scheduler.

Discontinuous user equipment reception in an inter-base station multi-flow scenario is problematic. Each cell may have different data activity rates and, thus, user equipment may be asked to move into a discontinuous reception mode due to low traffic activity in one cell, but another cell may be unaware of that request to enter discontinuous reception mode at user equipment, and schedule data to be sent in a stream to that same user equipment. Furthermore, a cell may incorrectly think that user equipment is operating according to a discontinuous reception mode when, in fact, it is not. Such problems are worsened when either of the base stations supporting cells is operable to issue a specific order (for example, an HS-SCCH order) to activate or deactivate discontinuous reception at user equipment.

Aspects described aim to manage discontinuous user equipment operation in an inter-base station multi-flow transmission scenario.

It will be appreciated that it is possible to inform base stations performing multi-flow HSDPA with a user equipment of the status of other base stations via an RNC; for example, via lub signalling. Such signalling is typically slow and a user equipment may have already opted to operate according to a discontinuous reception mode in one cell whilst another cell supported by a different base station may be unaware of such change and continue to send data to a user equipment. Any such data will be lost until an RNC informs a base station supporting such a cell to cease transmissions. Furthermore, such a method may force a cell which has lots of data to send to user equipment to enter a discontinuous transmission mode simply because another cell has less data to send to the user equipment.

Before specific implementations of aspects are illustrated a general overview will be provided. Aspects described are such that a user equipment may only move into a discontinuous reception mode if all cells participating in multi-flow transmissions to that user equipment have a low traffic activity. According to some embodiments, there may be a common discontinuous reception cycle and reception period implemented at the user equipment. The main aim of discontinuous reception is to save battery power when traffic activity is low. The traffic activity is low only when all cells' traffic activities are low. Thus, according to aspects described, a user equipment is not forced into a discontinuous reception mode unless all cells are experiencing low traffic. That is to say, a cell which has high traffic activity is not forced to move to communicate with user equipment operating according to a discontinuous reception regime.

According to one embodiment, user equipment moves into a discontinuous reception regime only if it receives a specific order; for example, an HS-SCCH order, from all cells with which it is communicating according to a multi-flow regime, that specific order being to activate discontinuous reception.

It will be appreciated that any cell which issues an order to activate discontinuous reception may be operable, according to some embodiments, to assume that user equipment has actually moved into discontinuous reception. No data will be lost in such a scenario, since such cells by definition have a low data activity and schedule packets to user equipment according to the scheduled user equipment's reception period and wake-up time.

According to some embodiments, user equipment is operable to move out of discontinuous reception if any one of the cells with which it was performing multi-flow communication sends a specific order, for example, an HS-SCCH order, to de-activate discontinuous reception. Since user equipment typically responds to such an explicit order with an acknowledgement, an uplink transmission made by user equipment will typically be detected by all cells in an active set. Thus, all cells operating according to multi-flow techniques are informed that the user equipment has moved out of discontinuous reception.

In some embodiments, if the user equipment has uplink data to transmit or makes an uplink data transmission as a result of receiving a downlink packet, the user equipment moves out of discontinuous reception mode.

According to some embodiments, the user equipment moves into discontinuous reception mode if an inactivity timer has expired in respect of each cell operating according to multi-flow transmission techniques. According to some embodiments, if different inactivity timers are used for different cells (that is to say, the inactivity timers for each cell have a different value), then user equipment moves into discontinuous reception mode only if all of the inactivity timers expire. An inactivity timer is used to determine if a cell is inactive and, hence, from a user equipment point of view the user equipment is deemed inactive in the downlink if all of the cells which are sending downlink packets to that user equipment are inactive. By waiting for all inactivity timers to expire, the user equipment effectively determines that all cells are inactive and thus that it can move into a discontinuous reception mode. In some embodiments this means that if multiple timers are running with respect to each cell inactivity, the user equipment moves into discontinuous reception mode once the longest inactivity timer expires, assuming that all other inactivity timers have expired.

According to some embodiments, a single inactivity timer is used for all cells and the user equipment re-sets such a common inactivity timer whenever it receives a downlink packet from any cell.

Although aspects and embodiments have been described in relation to user equipment and base stations in a 3G network, it will be appreciated that such a solution is also applicable for inter-site COMP in 4G or LTE networks.

### Example 1

According to one embodiment, a user equipment may be operating according to multi-flow operation and communicating with two inter-base station cells, namely Cell 1 (a serving cell) and Cell 2 (an assisting serving cell). Such a scenario is illustrated schematically in Figure 2.

In this embodiment, the common discontinuous reception cycle, reception period and offset period is used by both Cell 1 and Cell 2.

Figure 3 illustrates schematically transmissions and awake periods according to one embodiment. Figure 3 illustrates schematically user equipment activity. It can be seen that the user equipment initially receives data from Cell 1 and Cell 2. At time T1 the user equipment receives an order from Cell 1 to initiate discontinuous reception. Since the user equipment is still receiving data from Cell 2, the user equipment does not initiate discontinuous reception and instead continues with normal operation. Cell 1 may assume that the user equipment has entered a discontinuous reception mode and thus only sends data to user equipment during its perceived reception period; that is to say, when it is expecting the user equipment to be awake.

At time T2 the user equipment receives an order from Cell 2 to initiate discontinuous reception. Since there has been no order from Cell 1 to deactivate discontinuous reception and there has not been any traffic from Cell 1, the user equipment assumes that Cell 1 remains inactive. The user equipment has thus received an instruction to commence discontinuous reception from both cells to which it is attached and performing inter-cell multi-flow operation. The user equipment thus activates discontinuous reception from time T2 onwards and moves into discontinuous reception mode. At time T3, Cell 1 sends a packet to user equipment using a scheduled user equipment reception period. As a result of receiving a packet from Cell 1, the user equipment exits discontinuous reception mode and is no longer inactive. The user equipment responded to the transmission made by Cell 1 (for example, by sending an HSDPCCH to Cell 1) and thus that uplink transmission is likely to be detected by Cell 2. As a result, Cell 2 is informed that the user equipment has exited discontinuous reception mode. It can be seen that there is no need to involve the RNC.

### Example 2

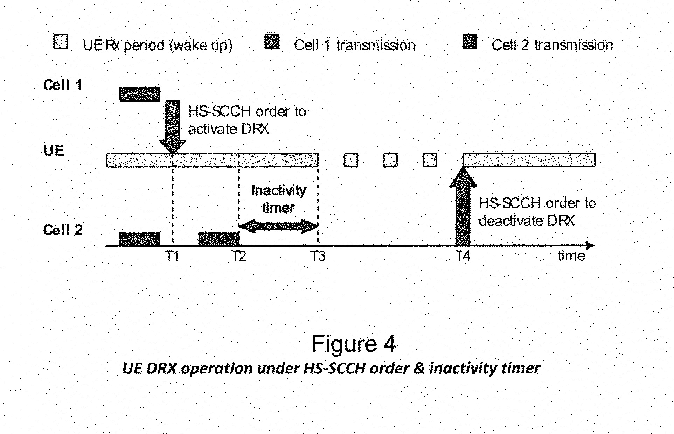

Figure 4 illustrates schematically transmissions and awake periods according to one embodiment. In the scenario illustrated in Figure 4, user equipment is operable to perform multi-flow transmissions with inter-base station cells, Cell 1 and Cell 2, as shown in Figure 4. A common discontinuous reception cycle, reception period and offset is used by both Cell 1 and Cell 2.

At time T1, the user equipment receives an order from Cell 1 to initiate discontinuous reception. Since the user equipment has not received any order, nor has an inactivity timer in respect of Cell 2 expired, the user equipment continues to perform according to normal operating techniques. According to some embodiments and, in particular, according to the embodiment illustrated in Figure 4, Cell 1 is operable to assume that the user equipment has moved into a discontinuous reception mode after time T1. No data is lost, since Cell 1 is inactive and may schedule data to the user equipment during the user equipment's expected reception periods.

At time T2, Cell 2 sends a final packet to user equipment. The user equipment inactivity timer begins and at time T3 that inactivity timer expires. As a result, the user equipment knows that Cell 1 is inactive due to receiving a previous specific order to initiate discontinuous reception, and an inactivity timer in relation to Cell 2 has expired. The user equipment thus moves into discontinuous reception at time T3. At time T4, Cell 2 is operable to send a specific order during one of the expected reception periods at the user equipment. That specific order from Cell 2 requests that the user equipment exits discontinuous reception. As a result, the user equipment exits discontinuous reception mode and sends an acknowledgement to Cell 2 via specific messaging; for example, an HS-DPCCH message. That uplink transmission is detected in Cell 1 and indicates to Cell 1 that the user equipment has now exited discontinuous reception.

Aspects allow discontinuous reception within a multi-flow communication network to be managed without the need for signalling to pass from base stations to an RNC.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of implementing a discontinuous reception pattern at user equipment operating to receive an independent stream of data traffic from at least two cells in a multi flow wireless communication network, said method comprising;
determining whether an indication to enter a discontinuous reception mode of operation has been stored in relation to each of said at least two cells and, if so, initiating said discontinuous reception pattern.

2. A method according to claim 1, wherein determining whether an indication to enter a discontinuous reception mode of operation has been stored in relation to each of said at least two cells comprises determining whether all of said at least two cells have indicated that they wish said user equipment to enter a discontinuous reception mode.

3. A method according to claim 1 or claim 2, wherein said indication comprises receipt of an explicit order to enter a discontinuous mode of operation.

4. A method according to claim 3, wherein said explicit order comprises an HS-SCCH order.

5. A method according to any preceding claim, wherein said indication comprises expiry of an inactivity timer.

6. A method according to claim 5, wherein said inactivity timer comprises a common inactivity timer which expires when no data packet is received at said user equipment for a preconfigured period of time from any of said at least two cells.

7. A method according to any preceding claim, wherein said implemented discontinuous reception pattern comprises implementation of common discontinuous reception pattern parameters indicated by said at least two cells.

8. A method according to any preceding claim, wherein said method further comprises exiting said discontinuous reception pattern if an indication to exit a discontinuous mode of operation is received from any one of said at least two cells.

9. A method according to claim 8, wherein said indication comprises receipt of downlink data traffic.

10. A method according to claim 8, wherein said indication comprises a specific order to exit said discontinuous reception mode of operation.

11. A method according to any preceding claim, wherein said method further comprises exiting said discontinuous reception pattern on determining uplink data traffic to be transmitted by said user equipment.

12. A method according to any preceding claim, wherein said at least two cells are supported by a single base station.

13. A method according to any one of claims 1 to 11, wherein said at least two cells are supported by at least two base stations.

14. A computer program product operable, when executed on a computer, to perform the method of any one claims 1 to 13.

15. User equipment operable to implement a discontinuous reception pattern, said user equipment operating to receive an independent stream of data traffic from at least two cells in a multi flow wireless communication network, said user equipment comprising;
determination logic operable to determine whether an indication to enter a discontinuous reception mode of operation has been stored in relation to each of said at least two cells and, initiation logic operable to initiate said discontinuous reception pattern if an indication to enter a discontinuous reception mode of operation has been stored in relation to each of said at least two cells.

## Amended claims

### Amended claims in accordance with Rule 137(2) EPC.

**1.** A method of implementing a discontinuous reception pattern at user equipment (50) operating to receive an independent stream of data traffic from at least two cells in a multi flow wireless communication network, said method comprising;
determining at said user equipment (50) whether an indication to enter a discontinuous reception mode of operation has been stored at said user equipment (50) in relation to all of said at least two cells and, if so, initiating said discontinuous reception pattern comprising implementation of common discontinuous reception pattern parameters indicated by said at least two cells.

**2.** A method according to claim 1, wherein said indication comprises receipt of an explicit order to enter a discontinuous mode of operation.

**3.** A method according to claim 2, wherein said explicit order comprises an HS-SCCH order.

**4.** A method according to any preceding claim, wherein said indication comprises expiry of an inactivity timer.

**5.** A method according to claim 4, wherein said inactivity timer comprises a common inactivity timer which expires when no data packet is received at said user equipment (50) for a preconfigured period of time from any of said at least two cells.

**6.** A method according to any preceding claim, wherein said method further comprises exiting said discontinuous reception pattern if an indication to exit a discontinuous mode of operation is received from any one of said at least two cells.

**7.** A method according to claim 6, wherein said indication comprises receipt of downlink data traffic.

**8.** A method according to claim 6, wherein said indication comprises a specific order to exit said discontinuous reception mode of operation.

**9.** A method according to any preceding claim, wherein said method further comprises exiting said discontinuous reception pattern on determining uplink data traffic to be transmitted by said user equipment (50).

**10.** A method according to any preceding claim, wherein said at least two cells are supported by a single base station (20).

**11.** A method according to any one of claims 1 to 9, wherein said at least two cells are supported by at least two base stations (20).

**12.** A computer program product operable, when executed on a computer, to perform the method of any one claims 1 to 11.

**13.** User equipment (50) operable to implement a discontinuous reception pattern, said user equipment (50) operating to receive an independent stream of data traffic from at least two cells in a multi flow wireless communication network, said user equipment comprising;
determination logic operable to determine whether an indication to enter a discontinuous reception mode of operation has been stored in relation to each of said at least two cells and, initiation logic operable to initiate said discontinuous reception pattern if an indication to enter a discontinuous reception mode of operation has been stored in relation to all of said at least two cells, said discontinuous reception pattern comprising implementation of common discontinuous reception pattern parameters indicated by said at least two cells.
